# EUROPÄISCHE PATENTSCHRIFT

(11) **EP 0 834 743 B1**
(45) Veröffentlichungstag und Bekanntmachung des Hinweises auf die Patenterteilung: **17.04.2002**
(21) Anmeldenummer: 97115836.5
(22) Anmeldetag: 11.09.1997
(51) Int. Cl.: G01P 5/14, G01P 13/02

(54) **Messeinrichtung zur Erfassung von Stau- und Statikdrücken bei einem Fluggerät**
Measuring device for detecting the dynamic and static pressures of an aircraft
Dispositif de mesure pour détecter les pressions dynamiques et statiques d'un aéronef

(30) Priorität: 01.10.1996 DE 19640606
(43) Veröffentlichungstag der Anmeldung: 08.04.1998
(73) Patentinhaber: Nord-Micro AG & Co. OHG, 60388 Frankfurt am Main (DE); EADS Deutschland GmbH, 81663 München (DE)
(72) Erfinder: Wandel, Hermann, 82008 Unterhaching (DE); Jost, Michael, Dipl.-Ing., 82031 Grünwald (DE); Sommer, Helmut, Dipl.-Ing., 61130 Nidderau (DE); Fischer-Wilk, Robert, 60594 Frankfurt/Main (DE)
(74) Vertreter: Preissner, Nicolaus, Dipl.-Ing.

(56) Entgegenhaltungen:
- EP-A- 0 229 534
- WO-A-89/02061
- DE-A- 4 207 951
- FR-A- 2 395 499
- US-A- 3 079 758
- US-A- 5 025 661

## Beschreibung

Die vorliegende Erfindung betrifft eine Meßeinrichtung zur Erfassung von Stau- und Statikdrücken bei einem Fluggerät, insbesondere einem Kampfflugzeug.

Bei bekannten Meßeinrichtungen der eingangs genannten Art (z.B. US-A-5025661) ist zur Erfassung der Drücke ein Staurohr vorgesehen, das als externes Bauteil beispielsweise am Rumpf eines Flugzeugs befestigt ist. Die im Staurohr gemessenen Drücke geben Auskunft über verschiedene Luftdatenparameter, wie Höhe und Geschwindigkeit. Anstell- oder Schiebewinkel des Flugzeugs werden üblicherweise mit Windfahnen gemessen. Die extern angeordneten Staurohre oder Windfahnen weisen verschiedene Nachteile auf. So ist es beispielsweise möglich, daß die Meßeinrichtung bei hohen Anstellwinkeln des Flugzeugs nicht mehr zuverlässig arbeitet oder im Extremfall sogar funktionsuntüchtig werden kann. Ein Grund hierfür ergibt sich aus der Tatsache, daß es bei hohen Anstellwinkeln des Flugzeugs am Staurohr zu großen Änderungen der Anströmrichtung relativ zu dessen Druckmeßöffnung kommt. Ein weiterer Nachteil der externen Anordnung besteht darin, daß das Staurohr und die Windfahnen von Radargeräten erfaßt werden können. Schließlich wird durch die externen Bauteile die aerodynamische Strömung am Flugzeugrumpf ungünstig beeinflußt.

Weiterhin ist aus der US-A-3079758 eine Meßeinrichtung zur Erfassung von Stau- und Statikdrucken bei einem Fluggerät bekannt mit einer Vielzahl von an der Rumpfspitze vorgesehenen Lufteintrittsöffnungen. Diese Lufteintrittsöffnungen sind über Verbindungskanäle mit Drucksensoren verbunden. Die Meßeinrichtung ist um zwei Achsen schwenkbar. Für eine solche bewegliche Meßeinrichtung mit ihren mechanischen Bauteilen ist ein relativ großer Bauraum notwendig.

Ausgehend vom genannten Stand der Technik liegt der Erfindung die Aufgabe zugrunde, eine Meßeinrichtung zu schaffen, bei der die vorstehend genannten Nachteile vermieden werden. Insbesondere soll eine Meßeinrichtung vorgeschlagen werden, die auch bei hohen Anstellwinkeln des Fluggeräts sicher und zuverlässig funktioniert.

Zur Lösung dieser Aufgabe wird bei einer Meßeinrichtung der eingangs genannten Art vorgeschlagen, daß die Meßeinrichtung eine Vielzahl von Drucksensoren aufweist, die in der Rumpfspitze des Fluggeräts angeordnet sind und daß an der Rumpfspitze eine Vielzahl von Lufteintrittsöffnungen vorgesehen sind, die über Verbindungskanäle mit den Drucksensoren verbunden sind. Die Drucksensoren sind in der Rumpfspitze angeordnet und die Lufteintrittsöffnungen sind in einer starr mit dem Fluggerät verbundenen Wandung der Rumpfspitze ausgebildet.

Durch die so ausgebildete Meßeinrichtung wird zunächst erreicht, daß auf solche Bauteile, die extern am Rumpf des Fluggeräts zu befestigen sind, verzichtet werden kann. Gemäß der vorliegenden Erfindung können alle für die Meßeinrichtung relevanten Bauteile in der Rumpfspitze des Fluggeräts integriert werden. Dadurch entfallen vorteilhafterweise solche Bauteile, die von einem Radar erfaßt werden können. Darüber hinaus werden zusätzlich die Strömungsverhältnisse am Rumpf des Fluggeräts verbessert, da aerodynamisch ungünstige Bauteile nunmehr in der Rumpfspitze integriert sind.

Die erfindungsgemäße Meßeinrichtung kann sowohl bei bemannten als auch bei unbemannten Fluggeräten verwendet werden.

Vorteilhafte Ausgestaltungen der Meßeinrichtung ergeben sich aus den Unteransprüchen.

Vorteilhaft sind die Lufteintrittsöffnungen über den Umfang und/oder über die Längsrichtung der Rumpfspitze versetzt in der Wandung der Rumpfspitze vorgesehen. Durch die geometrisch sinnvolle Anordnung der Lufteintrittsöffnungen an der Rumpfspitze wird erreicht, daß die Stau- und Statikdrücke auch bei großen Änderungen der Anströmrichtung relativ zu den Bezugsachsen der Lufteintrittsöffnungen sicher und zuverlässig erfaßt werden können.

Gemäß einer bevorzugten Ausführungsform der Erfindung sind die Drucksensoren in einem kreisscheibenförmigen Magazin angeordnet. Dabei können die Drucksensoren zylinderförmig ausgebildet sein. Vorzugsweise sind in dem scheibenförmigen Magazin elf Drucksensoren vorgesehen.

Erfindungsgemäß ist jeder Drucksensor über einen oder mehrere Verbindungskanäle mit jeweils einer der Lufteintrittsöffnungen verbunden. Dabei können die Verbindungskanäle erfindungsgemäß als Verbindungsrohre und/oder Bohrungen ausgebildet sein.

Gemäß einer bevorzugten Ausführungsform der Erfindung umfassen die Drucksensoren einen Grundkörper mit wenigstens einer C_{R}-Elektrode und einer C_{P}-Elektrode, einen Abstandhalter sowie einer Membran mit einer Gegenelektrode. Dabei sind der Grundkörper, der Abstandhalter sowie die Membran vorzugsweise aus einem keramischen Werkstoff gebildet. Durch den erfindungsgemäßen Drucksensor wird ein Druck, der auf die Membran wirkt, in ein elektrisches Signal umgewandelt, das entsprechend weiter verarbeitet werden kann.

Zur weiteren Verarbeitung der so erzeugten Signale ist erfindungsgemäß vorgesehen, daß die Drucksensoren mit einer elektrischen Auswerteeinheit verbunden sind.

Diese elektrische Auswerteeinheit weist vorteilhaft einen redundanten Aufbau auf und kann erfindungsgemäß scheibenförmig ausgebildet und in direkter Umgebung zu den Drucksensoren in der Rumpfspitze angeordnet sein.

Die elektrische Auswerteeinheit besteht bevorzugt aus wenigstens einem Mikroprozessor zur Verarbeitung der Signale von den Drucksensoren sowie einem mit dem Mikroprozessor verbundenen Signalwandler zur Umwandlung von elektrischen Ausgangssignalen aus dem Mikroprozessor in optische Signale.

Durch die erfindungsgemäße Ausgestaltung der elektrischen Auswerteeinheit ist es möglich, daß durch Realzeit bezogene Algorithmenberechnung im Mikroprozessor der elektrischen Auswerteeinheit alle Luftdatenparameter aus den gemessenen Stau- und Statikdrücken abgeleitet werden können. Diese Luftdatenparameter sind beispielsweise Höhe, Geschwindigkeit, Machzahl, Anstell- und Schiebewinkel des Fluggeräts. Die Umwandlung der elektrischen Signale in optische Signale innerhalb der elektrischen Auswerteeinheit hat den Vorteil, daß die erfindungsgemäße Meßeinrichtung andere Instrumente nicht beeinflussen kann oder von anderen Instrumenten nicht beeinflußt wird. So kann beispielsweise in der nächsten Umgebung der Meßeinrichtung auch das Radarsystem des Flugzeugs untergebracht sein. Beispielsweise ist es möglich, daß die Meßeinrichtung im vorderen Bereich der Rumpfspitze angeordnet ist, während das Radarsystem im hinteren Bereich der Rumpfspitze untergebracht ist. Das bedeutet, daß die in der Meßeinrichtung produzierten Signale an dem Radarsystem vorbeigeführt werden müssen. Elektrische Ausgangssignale der Meßeinrichtung könnten das Radarsystem nachteilig beeinflussen.

Gemäß einem weiteren Aspekt der vorliegenden Erfindung weist die Meßeinrichtung eine Heizvorrichtung auf. Diese Heizvorrichtung besteht vorteilhafterweise aus einem Heizelement zum Beheizen der Rumpfspitze und der Lufteintrittsöffnungen sowie mindestens einer Heizleitung, die mit dem Heizelement verbunden ist.

Die Heizleitung wird bevorzugt durch das scheibenförmige Magazin für die Drucksensoren und die elektrische Auswerteeinheit hindurchgeführt. Dazu sind in dem Magazin und der elektrischen Auswerteeinheit entsprechende Durchgangslöcher vorgesehen.

Gemäß einer bevorzugten Ausführungsform der Erfindung ist die Heizvorrichtung eine elektrische Heizvorrichtung.

Die Heizvorrichtung gemäß der vorliegenden Erfindung hat die Aufgabe, Vereisungen an der Rumpfspitze und den Lufteintrittsöffnungen zu vermeiden. Vorteilhafterweise kann durch die Heizvorrichtung die Temperatur der Rumpfspitze geregelt und überwacht werden.

Durch die Kombination verschiedener Werkstoffe an der Flugzeugrumpfspitze kann erreicht werden, daß die Flugzeugrumpfspitze errosionsunanfällig wird. Bei metallischen Werkstoffen kann somit auch eine Korrosion der Rumpfspitze vermieden werden.

Weiterhin ist erfindungsgemäß vorgesehen, daß die Rumpfspitze über eine Teflonbuchse mit dem Rumpf des Flugzeugs verbunden ist. Darüber hinaus kann die Rumpfspitze derart ausgebildet sein, daß sie mit Bezug auf die Meßeinrichtung nach dem Prinzip des Faraday'schen Käfigs wirkt, so daß die Meßeinrichtung hochfrequenzunempfindlich ist. Schließlich kann die Rumpfspitze vorteilhaft derart ausgebildet sein, daß durch Blitzschlag erzeugte Blitzströme über die Rumpfspitze abgeleitet werden. Auf diese Weise ist die Meßeinrichtung blitzschlagsicher.

Gemäß der vorliegenden Erfindung wird eine Meßeinrichtung zur Erfassung von Stau- und Statikdrücken bei einem Fluggerät geschaffen, die unabhängig vom Anstellwinkel des Fluggeräts sicher und zuverlässig funktioniert. Durch die integrierte Anordnung der Meßeinrichtung innerhalb der Rumpfspitze des Fluggeräts wird erreicht, daß auf externe Bauteile, wie sie bei Meßeinrichtungen gemäß dem Stand der Technik vorgesehen waren, verzichtet werden kann. Dadurch wird die Anzahl solcher Bauteile, die von einem Radarsystem geortet werden können, weiter reduziert. Da die erfindungsgemäße Meßeinrichtung zusammen mit anderen Komponenten innerhalb der Rumpfspitze des Fluggeräts untergebracht ist, wird durch die erfindungsgemäße Ausgestaltung der einzelnen Komponenten sichergestellt, daß sich die Meßeinrichtung sowie die anderen Instrumente gegenseitig nicht beeinflussen können. Insbesondere wird gemäß der vorliegenden Erfindung vermieden, daß durch die Meßeinrichtung eine Beeinflussung des Radarsystems auftreten kann. Auf Grund der räumlichen Enge innerhalb der Rumpfspitze kann nämlich das Radarsystem in nächster Umgebung zur Meßeinrichtung angeordnet sein. Durch die Umwandlung elektrischer Signale in optische Signale wird vermieden, daß die von der Meßeinrichtung abgegebenen Signale das empfindliche Radarsystem beeinflussen können. Zusätzlich zu dieser Maßnahme können in der Meßeinrichtung Absorberkegel integriert sein, wodurch Reflexionen zur Radarantenne noch weiter verringert werden können.

Ferner hat die optische Übertragung der von der Meßeinrichtung erzeugten Daten den Vorteil, daß die Anzahl der benötigten Leitungen reduziert werden kann. Dies ergibt sich aus der Tatsache, daß optisch entkoppelte Signale unterschiedlicher Intensität über ein und dieselbe Leitung geschickt werden können. Dadurch wird auch der konstruktive Aufwand bei der erfindungsgemäßen Meßeinrichtung verringert.

Durch die Ausbildung der Rumpfspitze aus erosions- und korrosionsbeständigem Material wird des weiteren erreicht, daß eventuell in die Rumpfspitze einschlagende Blitze direkt über die Oberfläche der Rumpfspitze abgeleitet werden. Darüber hinaus sind zusätzlich Blitzableitrohre denkbar, die im Bereich des Übergangs zwischen der Rumpfspitze und dem Rumpf des Fluggeräts im Rumpf des Fluggeräts vorgesehen sind. Diese leiten die Energie eines einschlagenden Blitzes sofort ab. Dadurch wird verhindert, daß die erfindungsgemäße Meßeinrichtung durch Blitzschlag beschädigt werden kann.

Nachfolgend wird die Erfindung anhand eines Ausführungsbeispiels beschrieben, das in der Zeichnung in schematischer Weise dargestellt ist. Dabei bilden alle beschriebenen und/oder nicht dargestellten Merkmale für sich oder in beliebiger Kombination den Gegenstand der Erfindung, unabhängig von ihrer Zusammenfassung in den Ansprüchen oder deren Rückbeziehung. Es zeigen:
- Figur 1: eine Querschnittsansicht einer Rumpfspitze für ein Kampfflugzeug mit einer erfindungsgemäßen Meßeinrichtung;
- Figur 2: eine Seiten- bzw. Frontansicht einer Rumpfspitze, an der eine Vielzahl von Lufteintrittsöffnungen ausgebildet sind;
- Figur 3: eine Draufsicht auf ein kreisscheibenförmiges Magazin zur Aufnahme der Drucksensoren;
- Figur 4: eine Draufsicht auf eine scheibenförmige elektrische Auswerteeinheit; und
- Figur 5: eine Explosionsansicht eines Drucksensors.

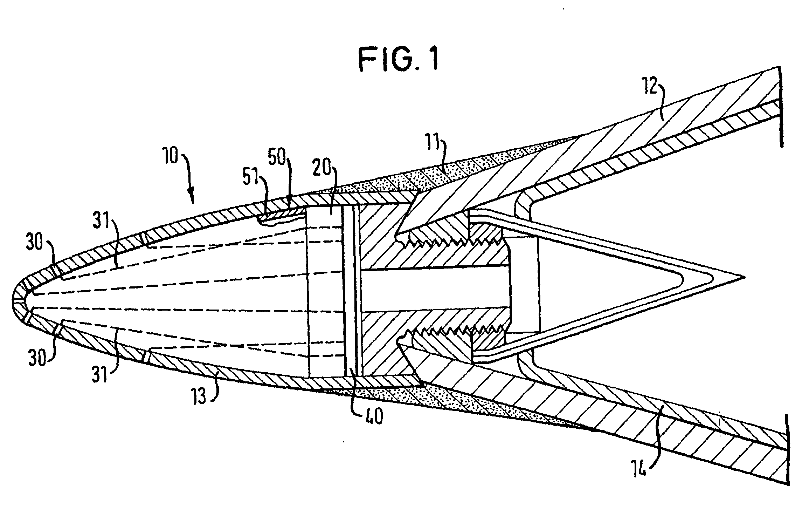

In Figur 1 ist eine Rumpfspitze 10 eines Kampfflugzeugs dargestellt, die an ihrer Außenseite über eine Teflonbuchse 11 mit dem Rumpf 12 des Kampfflugzeugs verbunden ist. Die Rumpfspitze 10 ist weitgehend als Hohlkörper ausgebildet, der durch eine Wandung 13 begrenzt ist. Innerhalb der Rumpfspitze 10 ist eine Meßeinrichtung zur Erfassung von Stau- und Statikdrücken angeordnet.

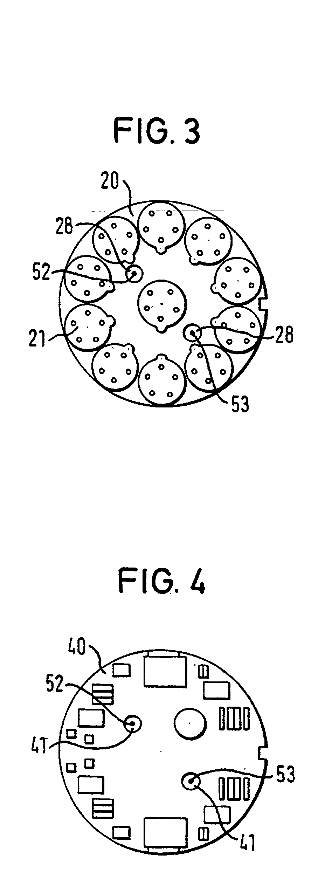

Wie in Figur 1 dargestellt ist, besteht die Meßeinrichtung im wesentlichen aus einem Magazin 20 für Drucksensoren, einer elektrischen Auswerteeinheit 40 sowie einer Vielzahl von Lufteintrittsöffnungen 30, die in der Wandung 13 der Rumpfspitze 10 vorgesehen sind. Die Lufteintrittsöffnungen 30 sind über Verbindungskanäle 31 mit den auf dem kreisscheibenförmigen Magazin 20 angeordneten Drucksensoren 21 (siehe Figur 3) verbunden. Zur Vereinfachung der Darstellung sind die Verbindungskanäle 31 in der Figur 1 lediglich durch gestrichelte Linien dargestellt.

Des weiteren zeigt Figur 1 eine Heizvorrichtung 50 mit einem Heizelement 51, das vor dem Magazin 20 für die Drucksensoren an der Innenseite der Wandung 13 der Rumpfspitze 10 angeordnet ist. Das Heizelement 51 steht in direktem Kontakt mit der Wandung 13 der Rumpfspitze 10. Die Heizvorrichtung 50 soll insbesondere ein Vereisen der Lufteintrittsöffnungen 30 und der Verbindungskanäle 31 verhindern.

Schließlich sind in Figur 1 Blitzableitrohre 14 im Rumpf 12 des Kampfflugzeugs angeordnet. Diese Blitzableitrohre 14 haben die Aufgabe, Blitze, die in die Rumpfspitze 10 einschlagen direkt abzuleiten. Dabei werden durch Blitze erzeugte Blitzströme, die in die Rumpfspitze 10 einschlagen, zunächst über die Oberfläche der Rumpfspitze abgeleitet. Im Übergang von der Rumpfspitze 10 zum Rumpf des Flugzeugs werden diese Blitzströme dann auf die Blitzableitrohre 14 übertragen. Auf diese Weise wird vermieden, daß die in die Rumpfspitze 10 einschlagenden Blitze die Meßeinrichtung sowie weitere, nicht dargestellte Instrumente innerhalb der Rumpfspitze beschädigen können.

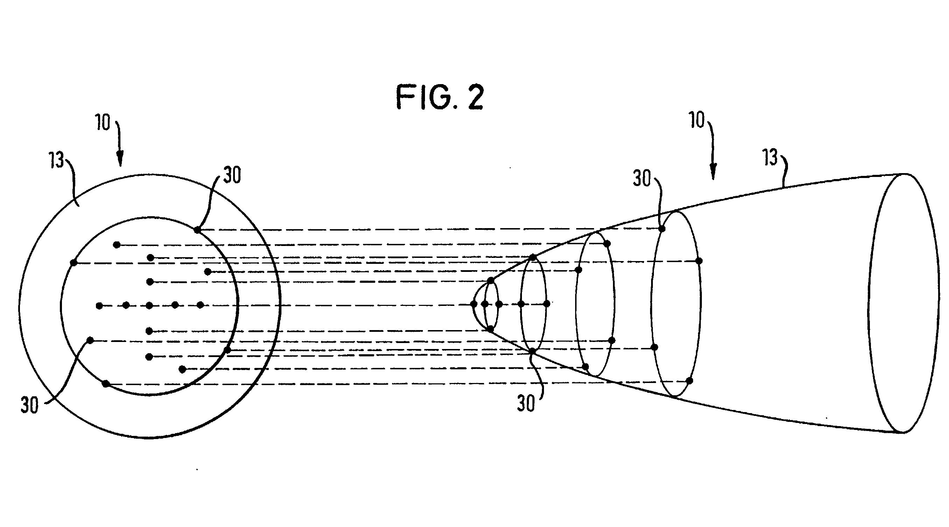

Aus Figur 2 ist ersichtlich, wie die Lufteintrittsöffnungen 30 in der Wandung 13 der Rumpfspitze 10 angeordnet sind. Wie sich aus dieser Figur ergibt, sind die Lufteintrittsöffnungen 30 im vorliegenden Ausführungsbeispiel sowohl über den Umfang als auch über die Längsrichtung der Rumpfspitze 10 versetzt in der Wandung 13 der Rumpfspitze 10 vorgesehen. Es wird darauf hingewiesen, daß die geometrische Anordnung der Lufteintrittsöffnungen 30 gemäß Figur 2 nur exemplarischer Natur ist und auch andere Konfigurationen möglich sind. Wie sich aus Figur 2 ergibt, sind die Lufteintrittsöffnungen 30 über einen weiten Bereich der Rumpfspitze 10 verteilt angeordnet. Durch diese Konfiguration wird sichergestellt, daß sowohl der Staudruck als auch der statische Druck bei großen Anstellwinkeln des Kampfflugzeugs, d.h. bei großen Änderungen der Anströmrichtung relativ zu den Bezugsachsen der Lufteintrittsöffnungen sicher und zuverlässig erfaßt werden kann.

Die Figuren 3 und 4 zeigen jeweils eine Draufsicht auf ein kreisscheibenförmiges Magazin 20 zur Aufnahme von Drucksensoren 21 und eine kreisscheibenförmig ausgebildete elektrische Auswerteeinheit 40.

Wie sich insbesondere aus Figur 3 ergibt, sind auf dem kreisscheibenförmigen. Magazin 20 insgesamt elf Drucksensoren 21 angeordnet. Dabei ist die Anzahl der Drucksensoren wiederum rein exemplarisch. Innerhalb des kreisscheibenförmigen Magazins 20 sind Durchgangslöcher 28 vorgesehen, durch die Heizleitungen 52, 53 hindurch geführt werden. Diese Heizleitungen 52, 53 sind Bestandteil der Heizvorrichtung 50 und führen zum Heizelement 51 (Figur 1). Das Hindurchführen der Heizelemente 52, 53 durch die Durchgangslöcher 28 des kreisscheibenförmigen Magazins 20 hat den Vorteil, daß der gesamte Querschnitt der Rumpfspitze 10 für die Aufnahme des kreisscheibenförmigen Magazins 20 benutzt werden kann. Auf diese Weise kann der für die Aufnahme der Drucksensoren 21 zur Verfügung stehende Raum innerhalb der Rumpfspitze 10 optimal ausgenutzt werden.

Aus dem gleichen Grund sind, wie in Figur 4 dargestellt ist, Durchgangslöcher 41 innerhalb der elektrischen Auswerteeinheit 40 vorgesehen. Diese Durchgangslöcher 41 dienen wiederum dazu, die Heizleitungen 52, 53 durch die elektrische Auswerteeinheit 40 hindurchzuführen. Die elektrische Auswerteeinheit 40 enthält alle Bauteile, die notwendig sind, um die in den Drucksensoren 21 erzeugten Signale bezüglich des gemessenen Stau- und Statikdrucks derart auszuwerten, daß aus ihnen alle notwendigen Luftdatenparameter berechnet werden können. Zu der Gruppe der dafür notwendigen, jedoch in der vorliegenden Beschreibung nicht näher beschriebenen Bauteile gehören auch Mikroprozessoren oder solche Signalwandler, die elektrische Signale in optische Signale umwandeln können.

Wie sich insbesondere aus Figur 1 ergibt, ist die elektrische Auswerteeinheit 40 und dem Magazin 20 für die Drucksensoren 21 direkt zugeordnet. Auf diese Weise wird eine kompakte Baueinheit gebildet, in der die aufgenommenen Druckdaten gleich verarbeitet und in optische Signale transformiert werden können. Bevorzugt bildet die aus der Auswerteeinheit 40 dem Magazin 20 bestehende Baueinheit den Abschluß der Rumpfspitze 10. Dadurch wird zum einen der benötigte Platzbedarf für die Meßeinrichtung verringert. Zum anderen wird verhindert, daß eventuell abgehende elektrische Signale in Wechselwirkung mit anderen Instrumenten treten und diese beeinflussen können.

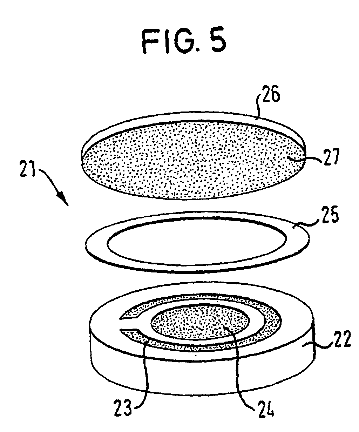

Figur 5 zeigt den prinzipiellen Aufbau eines Drucksensors 21. Der Drucksensor 21 besteht aus einem Grundkörper 22, in dem eine C_{R}-Elektrode 23 sowie eine C_{P}-Elektrode 24 angeordnet sind. Der Grundkörper 22 ist über einen Abstandhalter 25 mit einer Membran 26 verbunden, die ihrerseits eine Gegenelektrode 27 aufweist. Im vorliegenden Ausführungsbeispiel sind der Grundkörper 22, der Abstandhalter 25 sowie die Membran 26 aus einem keramischen Werkstoff hergestellt.

Nachfolgend wird nun der Betrieb und die Funktionsweise der erfindungsgemäßen Meßeinrichtung beschrieben. Zur Bestimmung des Stau- und Statikdrucks tritt im Flugbetrieb Luft in die Lufteintrittsöffnungen 30 ein, die in der Wandung 13 der Rumpfspitze 10 vorgesehen sind. Die durch die Lufteintrittsöffnungen 30 eingetretene Luft wird über Verbindungsrohre 31 zu den Drucksensoren 21 geleitet. Dabei stehen die Verbindungskanäle 31 sowohl mit den Lufteintrittsöffnungen 30 als auch mit Drucksensoren 21 in direktem Kontakt. Die durch die Verbindungskanäle 31 strömende Luft trifft am Ende der Verbindungskanäle 31 auf die Membran 26 eines Drucksensors 21. Dadurch wird die Membran 26, die über den Abstandhalter 25 beabstandet zum Grundkörper 22 angeordnet ist, in Richtung des Grundkörpers 22 gebogen. Der Grundkörper 22 ist mit Elektroden 23, 24, und die Membran 26 ist mit einer Gegenelektrode 27 bestückt. Auf Grund der räumlichen Trennung der jeweiligen Elektroden durch den Abstandhalter 25 entspricht der Drucksensor 21 im Aufbau einem Kondensator. Durch die Verschiebung der Membran 26 in Richtung des Grundkörpers 22 und damit der Gegenelektrode 27 in Richtung der Elektroden 23, 24 wird die durch die Elektrodenoberflächen definierte Kapazität verändert. Da die Verschiebung der Membran 26 abhängig ist von dem in dem Verbindungskanal 31 stehenden Luftdruck, ist die Änderung der Kapazität zwischen den Elektroden 23, 24 und 27 proportional der Änderung des Luftdrucks. Somit ist der Drucksensor 21 geeignet, den jeweils herrschenden Luftdruck in ein elektrisches Signal umzuwandeln.

Die auf diese Weise in den Drucksensoren 21 erzeugten elektrischen Signale werden zu der elektrischen Auswerteeinheit 40 weitergeleitet, die einen redundanten Aufbau besitzt. Diese elektrische Auswerteinheit 40 ist dicht hinter dem kreisscheibenförmigen Magazin 20 für die Drucksensoren 21 angeordnet und beinhaltet alle elektrischen Bauteile, die für die Auswertung und Weiterleitung dieser elektrischen Signale notwendig sind. Im vorliegenden Ausführungsbeispiel umfaßt die elektrische Auswerteeinheit 40 einen Mikroprozessor, in dem durch Realzeit bezogene Algorithmenberechnung alle erforderlichen Luftdatenparameter aus dem gemessenen Stau- und Statikdruck abgeleitet werden. Diese relevanten Luftdatenparameter sind insbesondere Höhe, Geschwindigkeit, Machzahl, Anstell- und Schiebewinkel. Die vom Mikroprozessor berechneten Werte werden als digitale Signale einem nicht dargestellten Signalwandler zugeführt. In diesem Signalwandler werden die elektrischen Ausgangssignale des Mikroprozessors in optische Signale umgewandelt. Diese resultierenden optischen Signale können auf einfache Weise über eine Lichtleitung zur weiteren Verarbeitung und Nutzung zum Flight-Control-Computer des Kampfflugzeugs weitergeleitet werden.

Bei der vorstehend beschriebenen Meßeinrichtung könnte der Fall eintreten, daß die Wandung 13 der Rumpfspitze 10 oder die Lufteintrittsöffnungen 30 während des Flugs vereisen. Eine solche Vereisung würde die Funktionstüchtigkeit der Meßeinrichtung beeinträchtigen und zu fehlerhaften Resultaten führen. Aus diesem Grund ist die erfindungsgemäße Meßeinrichtung mit einer Heizvorrichtung 50 ausgerüstet. Die Heizeinrichtung 50 besteht aus einem Heizelement 51, das im vorliegenden Ausführungsbeispiel elektrisch betrieben wird. Das elektrische Heizelement 51 ist über Heizleitungen 52, 53 mit einer geeigneten Stromquelle (nicht dargestellt) verbunden. Das Heizelement 51 ist an der Innenseite der Wandung 13 von der Rumpfspitze 10 angeordnet. Auf Grund der Tatsache, daß die Rumpfspitze aus einem wärmeleitenden Material hergestellt ist, wird bei Betätigung des Heizelements 51 die darin erzeugte Wärme auf die Rumpfspitze 10 und damit auch auf die Lufteintrittslöcher 30 übertragen. Mittels der Heizvorrichtung wird somit verhindert, daß es auf der Rumpfspitze 10 bzw. in den Lufteintrittslöchern 30 zu Vereisungen kommen kann.

Wie in Figur 1 dargestellt ist, sind sowohl das Magazin 20 für die Drucksensoren 21 als auch die elektrische Auswerteeinheit 40 in demjenigen Bereich der Rumpfspitze 10 angeordnet, der den größten Durchmesser aufweist. Dies ist im vorliegenden Ausführungsbeispiel der Abschlußbereich der Rumpfspitze. Auf diese Weise wird ermöglicht, daß möglichst viele - im vorliegenden Fall elf - Drucksensoren 21 im Magazin 20 untergebracht werden können. Dadurch wird die Genauigkeit und Zuverlässigkeit der erfindungsgemäßen Meßeinrichtung erhöht. Um zu verhindern, daß in der Rumpfspitze wertvoller Platz zum Anordnen der Drucksensoren 21 verlorengeht, befinden sich innerhalb des Magazins 20 bzw. der elektrischen Auswerteeinheit 40 Durchgangslöcher 28, 41. Dabei sind insbesondere die Durchgangslöcher 28 des Magazins 20 in solch einem Bereich angeordnet, in dem Drucksensoren 21 nicht aufgenommen werden. Da die Durchgangslöcher 28, 41 zur Aufnahme der Heizleitungen 52, 53 dienen, die für die Versorgung des Heizelements 51 mit elektrischem Strom notwendig sind, wird mit der so beschriebenen Anordnung der Heizleitungen 52, 53 der zur Verfügung stehende Raum innerhalb der Rumpfspitze 10 optimal genutzt.

Mit der vorliegenden Erfindung ist es möglich, eine Meßeinrichtung zur Erfassung von Stau- und Statikdrücken bei einem Fluggerät, insbesondere bei einem Kampfflugzeug zu schaffen, mit der auch bei hohen Anstellwinkeln eine sichere und genaue Funktionsweise gewährleistet ist.

## Patentansprüche

1. Meßeinrichtung zur Erfassung von Stau- und Statikdrücken bei einem Fluggerät, insbesondere einem Kampfflugzeug, mit einer Vielzahl von an der Rumpfspitze (10) vorgesehenen Lufteintrittsöffnungen (30), die über Verbindungskanäle (31) mit Drucksensoren (21) verbunden sind, **dadurch gekennzeichnet, daß** die Drucksensoren (21) in der Rumpfspitze (10) des Fluggeräts angeordnet sind und die Lufteintrittsöffnungen (30) in einer starr mit dem Fluggerät verbundenen Wandung (13) der Rumpfspitze (10) ausgebildet sind.

2. Meßeinrichtung nach Anspruch 1, **dadurch gekennzeichnet, daß** die Lufteintrittsöffnungen (30) über den Umfang und/oder über die Längsrichtung der Rumpfspitze (10) versetzt in der Wandung (13) der Rumpfspitze (10) vorgesehen sind.

3. Meßeinrichtung nach Anspruch 1 oder 2, **dadurch gekennzeichnet, daß** die Drucksensoren (21) in einem kreisscheibenförmigen Magazin (20) angeordnet sind.

4. Meßeinrichtung nach einem der vorhergehenden Ansprüche, **dadurch gekennzeichnet, daß** die Drucksensoren (21) zylinderförmig ausgebildet sind.

5. Meßeinrichtung nach einem der vorhergehenden Ansprüche, **dadurch gekennzeichnet, daß** die Drucksensoren (21) einen Grundkörper (22) mit wenigstens einer C_{R}-Elektrode (23) und einer C_{P}-Elektrode (24), einen Abstandhalter (25) sowie eine Membran (26) mit einer Gegenelektrode (27) umfassen, wobei der Grundkörper (22), der Abstandhalter (25) und die Membran (26) vorzugsweise aus einem keramischen Werkstoff gebildet sind.

6. Meßeinrichtung nach einem der vorhergehenden Ansprüche, **dadurch gekennzeichnet, daß** jeder Drucksensor (21) über einen oder mehrere Verbindungskanäle (31) mit jeweils einer der Lufteintrittsöffnungen (30) verbunden ist.

7. Meßeinrichtung nach einem der vorhergehenden Ansprüche, **dadurch gekennzeichnet, daß** die Verbindungskanäle (31) als Verbindungsrohre und/oder Bohrungen ausgebildet sind.

8. Meßeinrichtung nach einem der vorhergehenden Ansprüche, **dadurch gekennzeichnet, daß** elf Drucksensoren (21) vorgesehen sind.

9. Meßeinrichtung nach einem der vorhergehenden Ansprüche, **dadurch gekennzeichnet, daß** die Drucksensoren (21) mit einer elektrischen Auswerteeinheit (40) verbunden sind.

10. Meßeinrichtung nach Anspruch 9, **dadurch gekennzeichnet, daß** die elektrische Auswerteeinheit (40) einen redundanten Aufbau aufweist.

11. Meßeinrichtung nach Anspruch 9 oder 10, **dadurch gekennzeichnet, daß** die elektrische Auswerteeinheit (40) scheibenförmig ausgebildet und in direkter Umgebung zu den Drucksensoren (21) in der Rumpfspitze (10) angeordnet ist.

12. Meßeinrichtung nach einem der Ansprüche 9 bis 11, **dadurch gekennzeichnet, daß** die elektrische Auswerteeinheit (40) wenigstens einen Mikroprozessor zur Verarbeitung der Signale von den Drucksensoren (21) sowie eine mit dem Mikroprozessor verbundenen Signalwandler zur Umwandlung von elektrischen Ausgangssignalen aus dem Mikroprozessor in optische Signale umfaßt.

13. Meßeinrichtung nach einem der vorhergehenden Ansprüche, **dadurch gekennzeichnet, daß** die Meßeinrichtung weiterhin eine Heizvorrichtung (50) umfaßt.

14. Meßeinrichtung nach Anspruch 13, **dadurch gekennzeichnet, daß** die Heizvorrichtung (50) ein Heizelement (51) zum Beheizen der Rumpfspitze (10) und der Lufteintrittsöffnungen (30) sowie mindestens eine Heizleitung (52, 53) umfaßt, die mit dem Heizelement (51) verbunden ist.

15. Meßeinrichtung nach Anspruch 14, **dadurch gekennzeichnet, daß** die Heizleitung (52, 53) durch Durchgangslöcher (28) im kreisscheibenförmigen Magazin (20) für die Drucksensoren (21) und Durchgangslöcher (41) in der elektrischen Auswerteeinheit (40) hindurchgeführt ist.

16. Meßeinrichtung nach einem der Ansprüche 13 bis 15, **dadurch gekennzeichnet, daß** die Heizvorrichtung (50) eine elektrische Heizvorrichtung ist.

17. Meßeinrichtung nach einem der vorhergehenden Ansprüche, **dadurch gekennzeichnet, daß** die Rumpfspitze (10) aus erosionsbeständigem Material gebildet ist.

18. Meßeinrichtung nach einem der vorhergehenden Ansprüche, **dadurch gekennzeichnet, daß** die Rumpfspitze (10) über eine Teflonbuchse (11) mit dem Rumpf (12) des Fluggeräts verbunden ist.

19. Meßeinrichtung nach einem der vorhergehenden Ansprüche, **dadurch gekennzeichnet, daß** die Meßeinrichtung hochfrequenzunempfindlich ist, vorzugsweise durch die als Faraday'scher Käfig wirkende Rumpfspitze (10).

20. Meßeinrichtung nach einem der vorhergehenden Ansprüche, **dadurch gekennzeichnet, daß** die Meßeinrichtung blitzschlagsicher ist, vorzugsweise durch Ableitung des Blitzstroms über die Rumpfspitze (10).

## Claims

1. A sensing means measuring Pitot and static pressures of an aircraft Pitot/static pressure sensing means, more particularly of a fighter aircraft, having a plurality of air intake ports (30) provided in a radome (10) and connected to pressure sensors (21) by connecting passages (31), **characterized in that** the pressure sensors (21) are arranged in the radome (10) of the aircraft and that the air intake ports (30) are provided in a wall (13) of the radome (10) that is rigidly connected to the aircraft.

2. The sensing means as set forth in claim 1, **characterized in that** said air intake ports (30) are provided in the wall (13) of said radome (10) offset about the periphery and/or in the longitudinal direction of said radome (10).

3. The sensing means as set forth in claim 1 or 2, **characterized in that** said pressure sensors (21) are arranged in a circular disk magazine (20).

4. The sensing means as set forth in any of the preceding claims, **characterized in that** said pressure sensors (21) are configured cylindrically.

5. The sensing means as set forth in any of the preceding claims, **characterized in that** said pressure sensors (21) comprise a basebody (22) having at least one C_{R} electrode (23) and one C_{P} electrode (24), a spacer (25) as well as a diaphragm (26) with an opposing electrode (27), said basebody (22), spacer (25) and diaphragm (26) being preferably made of a ceramics material.

6. The sensing means as set forth in any of the preceding claims, **characterized in that** each pressure sensor (21) is connected via one or more connecting passages (31) to each air intake port (30).

7. The sensing means as set forth in any of the preceding claims, **characterized in that** said connecting passages (31) are configured as connecting tubes and/or drilled passages.

8. The sensing means as set forth in any of the preceding claims, **characterized in that** eleven pressure sensors (21) are provided.

9. The sensing means as set forth in any of the preceding claims, **characterized in that** said pressure sensors (21) are connected to an electronic analyzer (40).

10. The sensing means as set forth in claim 9, **characterized in that** said electronic analyzer (40) is redundant in configuration.

11. The sensing means as set forth in claim 9 or 10, **characterized in that** said electronic analyzer (40) is configured disk-shaped and arranged in the immediate surroundings of said pressure sensors (21) in said radome (10).

12. The sensing means as set forth in any of the claims 9 to 11, **characterized in that** said electronic analyzer (40) consists of at least one microprocessor for processing said signals from the pressure sensors (21) as well as a signal converter connected to said microprocessor for converting said the electric signals from said microprocessor into optical signals.

13. The sensing means as set forth in any of the preceding claims, **characterized in that** said sensing means further comprises a heater (50).

14. The sensing means as set forth in claim 13, **characterized in that** said heater (50) comprises a heating element (51) for heating said radome (10) and said air intake ports (30) as well as at least one heating conductor (52, 53) connected to said heating element (51).

15. The sensing means as set forth in claim 14, **characterized in that** said heating conductor (52, 53) passes through through-holes (28) in said circular disk magazine (20) for said pressure sensors (21) and through-holes (41) in said electronic analyzer (40).

16. The sensing means as set forth in any of the claims 13 to 15, **characterized in that** said heater (50) is an electrical heater.

17. The sensing means as set forth in any of the preceding claims, **characterized in that** said radome (10) is formed of a material resistant to erosion.

18. The sensing means as set forth in any of the preceding claims, **characterized in that** said radome (10) is connected to said fuselage (12) of said aircraft by a Teflon bush (11).

19. The sensing means as set forth in any of the preceding claims, **characterized in that** said sensing means is insensitive to high frequencies, preferably by said radome (10) acting as a Faraday cage.

20. The sensing means as set forth in any of the preceding claims, **characterized in that** said sensing means is lightning-proof, preferably by arresting the lightning current via said radome (10).

## Revendications

1. Dispositif de mesure pour détecter les pressions dynamiques et statiques dans un aéronef, en particulier dans un avion de combat, comportant une multitude d'ouvertures d'entrée d'air (30) qui sont prévues sur le nez (10) et qui sont reliées à des capteurs de pression (21) via des canaux de liaison (31), **caractérisé en ce que** les capteurs de pression (21) sont agencés dans le nez (10) de l'aéronef et les ouvertures d'entrée d'air (30) sont ménagées dans une paroi (13) du nez (10) reliée rigidement à l'aéronef.

2. Dispositif de mesure selon la revendication 1, **caractérisé en ce que** les ouvertures d'entrée d'air (30) sont prévues dans la paroi (13) du nez (10) de façon décalée sur la périphérie et/ou sur la direction longitudinale du nez (10).

3. Dispositif de mesure selon l'une ou l'autre des revendications 1 et 2, **caractérisé en ce que** les capteurs de pression (21) sont agencés dans un magasin (20) en forme de disque circulaire.

4. Dispositif de mesure selon l'une quelconque des revendications précédentes, **caractérisé en ce que** les capteurs de pression (21) sont réalisés sous forme cylindrique.

5. Dispositif de mesure selon l'une quelconque des revendications précédentes, **caractérisé en ce que** les capteurs de pression (21) comprennent un corps de base (22) avec au moins une électrode C_{R} (23) et une électrode C_{P} (24), un élément d'écartement (25) ainsi qu'un diaphragme (26) avec une électrode antagoniste, le corps de base (22), l'élément écarteur (25) et le diaphragme (26) étant formés de préférence en matériau céramique.

6. Dispositif de mesure selon l'une quelconque des revendications précédentes, **caractérisé en ce que** chaque capteur de pression (21) est relié respectivement à l'une des ouvertures d'entrée d'air (30) via un ou plusieurs canaux de liaison (31).

7. Dispositif de mesure selon l'une quelconque des revendications précédentes, **caractérisé en ce que** les canaux de liaison (31) sont réalisés sous forme de tubes de liaison et/ou sous forme de perçages.

8. Dispositif de mesure selon l'une quelconque des revendications précédentes, **caractérisé en ce qu'**il est prévu onze capteurs de pression (21).

9. Dispositif de mesure selon l'une quelconque des revendications précédentes, **caractérisé en ce que** les capteurs de pression (21) sont reliés à une unité d'évaluation électrique (40).

10. Dispositif de mesure selon la revendication 9, **caractérisé en ce que** l'unité d'évaluation électrique (40) présente une structure redondante.

11. Dispositif de mesure selon l'une ou l'autre des revendications 9 et 10, **caractérisé en ce que** l'unité d'évaluation électrique (40) est réalisée en forme de disque et est agencée au voisinage direct des capteurs de pression (21) dans le nez (10).

12. Dispositif de mesure selon l'une quelconque des revendications 9 à 11, **caractérisé en ce que** l'unité d'évaluation électrique (40) comprend au moins un microprocesseur pour traiter les signaux provenant des capteurs de pression (21) ainsi qu'un convertisseur de signaux connecté au microprocesseur pour convertir les signaux de sortie électriques provenant du microprocesseur en signaux optiques.

13. Dispositif de mesure selon l'une quelconque des revendications précédentes, **caractérisé en ce que** le dispositif de mesure comprend en outre un dispositif de chauffage (50).

14. Dispositif de mesure selon la revendication 13, **caractérisé en ce que** le dispositif de chauffage (50) comprend un élément chauffant (51) pour chauffer le nez (10) et les ouvertures d'entrée d'air (30), ainsi qu'au moins une ligne de chauffage (52, 53) qui est connectée à l'élément chauffant (51).

15. Dispositif de mesure selon la revendication 14, **caractérisé en ce que** la ligne de chauffage (52, 53) est menée à travers des trous de passage (28) dans le magasin (20) en forme de disque circulaire pour les capteurs de pression (21) et à travers des trous de passage (41) dans l'unité d'évaluation électrique (40).

16. Dispositif de mesure selon l'une quelconque des revendications 13 à 15, **caractérisé en ce que** le dispositif de chauffage (50) est un dispositif de chauffage électrique.

17. Dispositif de mesure selon l'une quelconque des revendications précédentes, **caractérisé en ce que** le nez (10) est formé en matériau résistant à l'érosion.

18. Dispositif de mesure selon l'une quelconque des revendications précédentes, **caractérisé en ce que** le nez (10) est relié au fuselage (12) de l'aéronef via une douille en Téflon (11).

19. Dispositif de mesure selon Tune quelconque des revendications précédentes, **caractérisé en ce que** le dispositif de mesure est insensible aux hautes fréquences, de préférence en prévoyant que le nez (10) fait office de cage de Faraday.

20. Dispositif de mesure selon l'une quelconque des revendications précédentes, **caractérisé en ce que** le dispositif de mesure est protégé contre la foudre, de préférence par décharge des courants de foudre via le nez (10).
